# EUROPÄISCHE PATENTSCHRIFT

(11) **EP 1 232 130 B1**
(45) Veröffentlichungstag und Bekanntmachung des Hinweises auf die Patenterteilung: **19.05.2004**
(21) Anmeldenummer: 00976036.4
(22) Anmeldetag: 16.11.2000
(51) Int. Cl.: C05F 17/02, C05F 17/00

(54) **BELÜFTUNGSANORDNUNG FÜR ROTTEMIETEN ODER DERGLEICHEN DEPONIEN SOWIE VERFAHREN ZUM BETREIBEN EINER DERARTIGEN BELÜFTUNGSANORDNUNG**
AERATION DEVICE FOR DIGESTION PITS OR SIMILAR WASTE DISPOSAL SITES AND A METHOD FOR OPERATING SAID AERATION DEVICE
SYSTEME D'AERATION POUR DEPOTS DE DIGESTION OU DECHARGES SIMILAIRES, AINSI QUE PROCEDE POUR L'EXPLOITATION D'UN TEL SYSTEME D'AERATION

(30) Priorität: 26.11.1999 DE 19957095; 22.12.1999 DE 19962260
(43) Veröffentlichungstag der Anmeldung: 21.08.2002
(73) Patentinhaber: EuRec Technology GmbH Entsorgungsanlagen, 36460 Merkers (DE)
(72) Erfinder: KOTTMANN, Norbert, 36277 Schenklengsfeld (DE)
(74) Vertreter: Kruspig, Volkmar, Dipl.-Ing.
(86) Internationale Anmeldenummer: PCT/EP2000/011388
(87) Internationale Veröffentlichungsnummer: WO 2001/038260

(56) Entgegenhaltungen:
- DE-A- 4 416 686
- DE-A- 19 653 116
- DE-C- 4 343 767
- DE-C- 19 503 345
- DE-C- 19 643 142
- US-A- 5 053 124

## Beschreibung

Die Erfindung betrifft eine Belüftungsanordnung für Rottemieten oder dergleichen Deponien, wobei die Rottemiete auf einem befestigten, wasserundurchlässigen Deponiegrund aufgeschichtet und im Fußbereich der Rottemiete mindestens ein nach oben und/oder seitlich luftdurchlässiger Belüftungskanal vorgesehen ist, gemäß Oberbegriff des Patentanspruchs 1, sowie ein Verfahren zum Betrieben einer derartigen Belüftungsanordnung.

Belüftungsanordnungen für Rottemieten oder dergleichen Deponien, die nach dem Kaminzugsystem oder nach Art einer aktiven Belüftung mit Luftzufuhr durch einen motorisch betriebenen Lüfter arbeiten, sind bekannt. Ebenso existieren Belüftungssysteme, bei denen eine druckluftbeaufschlagte Lüftung erfolgt.

Bei den Kaminzugsystemen verlaufen unterhalb der Rottemieten Belüftungskanäle, z.B. in Form von gelochten oder mit schlitzförmigen Öffnungen versehenen Rohren, wobei über die Rohre Frischluft eintreten kann. Die Schlitze oder Öffnungen ermöglichen dann ein verteiltes Austreten der Frischluft von unten nach oben durch die Rottemiete hindurch. Auf diese weise werden die in den Bioabfällen vorhandenen Mikroorganismen mit Sauerstoff versorgt und es kann ein aerober Umwandlungsprozeß, d.h. der Rotteprozeß beginnen. Die durch die Wirkung der Mikroorganismen erwärmte Luft steigt nach oben, mit der Folge eines in der Rottemiete entstehenden Unterdrucks. Aufgrund dieser Unterdruckbildung wird über das am Fuß der Rottemiete installierte Belüftungssystem erneut Frischluft angesaugt, so daß bei entsprechender Rottenaktivität die gewünschte Sauerstoffzufuhr erfolgen kann.

Bei einem solchen Kaminsystem besteht jedoch ein wesentlicher Nachteil darin, daß bei geringen Temperaturunterschieden zwischen Rottemiete und Außentemperatur nur eine unzureichende Luftmenge durch die Rotte ziehen kann. Weiterhin sucht sich die eintretende Luft einen Weg mit geringstem Strömungswiderstand mit der Folge, daß die Rottemiete in wesentlichen Bereichen oft nur unzureichend durchlüftet wird. Letzteres ist insbesondere in Ländern mit relativ hohen Durchschnittstemperaturen und daher sich ergebenden nur geringen Temperaturunterschieden zwischen Rottekern und Peripherie der Fall. Durch die in Folge eintretende unzureichende Sauerstoffzufuhr entstehen anaerobe Bereiche in der Rottemiete, die den Rotteprozeß und die spätere Mineralisierung, d.h. den Kompostierungsvorgang hemmen bzw. nachteilig beeinflussen.

Ein zusätzlicher Nachteil ist die relativ geringe Aufbauhöhe natürlich belüfteter Rottemieten, die im Bereich von etwa 1,8 bis 2,5m liegt, wodurch bei anfallenden Deponiemengen die Rotte lateral eine zu große Flächenausdehnung erfährt.

Bei Zwangsbelüftungssystemen wird mit Hilfe motorisch betriebener Lüfter ständig Umgebungsluft in den Grundkörper der Rottemiete geblasen, wodurch auch bei relativ geringen Temperaturunterschieden eine Verbesserung der Durchlüftung der Rottemiete gesichert ist, so daß die Rottemiete entsprechend höher aufgebaut werden kann.

Bei kontinuierlich arbeitenden aktiven Belüftungssystemen ergibt sich jedoch der Nachteil, daß aufgrund der ständig einströmenden Luft im gesamten Belüftungsrohr kaum Überdruck aufgebaut werden kann, da auch in diesem Fall die Luft an der Stelle mit dem geringsten Luftwiderstand nach oben entweicht. Daher mangelt es auch bei einer solchen Ausführungsform an einer ausreichenden und gleichmäßigen Belüftung der Rottemiete. Es wird zwar die gesamte einströmende Luft an die Rottemiete abgegeben, jedoch erfolgt die Verteilung über die gesamte Miete und deren Volumen nur unzureichend. Die Länge der Belüftungsrohre und damit die maximale Breite der Rottemiete ist begrenzt, wobei auch bei aktiven Belüftungssystemen die Gefahr besteht, daß nicht alle Zonen der Rottemiete ausreichend belüftet werden mit der Folge der bereits erwähnten anaeroben Zonen.

Bereits vorgeschlagene aktive, durch Druckluft betriebene Rottebelüftungssysteme greifen auf mehrere Druckluftkessel zurück, die auf der Rottemiete betrieben werden. Die Druckluftkessel stehen mit einem Kompressor in Verbindung und werden mit Druckluft versorgt. An jedem Druckluftkessel ist ein Rohr angeordnet, das von oben durch die Rottemiete bis zum Grund derselben eingelassen wird. Das Rohr wiederum ist durch ein Ventil zum Kessel hin verschlossen, wobei mit Erreichen eines vorgegebenen Luftdrucks eine selbsttätige Ventilöffnung erfolgt, wodurch die Luft stoßartig durch das Rohr in die Rottemiete entweichen kann. Die unmittelbare Umgebung des Belüftungsrohrs wird in der Regel ausreichend mit Frischluft versorgt, wobei im Anschluß erwärmte Luft durch die Rottemiete nach oben aufsteigt.
Aus der Schilderung obiger Konstruktion ist ersichtlich, daß ein wesentlicher Nachteil darin besteht, daß auf der Rottemiete eine Verlegung von Druckleitungen erfolgen muß. Darüber hinaus müssen die Druckleitungen so beschaffen sein, daß diese auch bei während der Rottezeit sinkender Mietenhöhe keinen Schaden erleiden. An die Verlegungsart und das einzusetzende Material werden daher hohe Anforderungen gestellt. Letztendlich ist der Aufwand des Eindrückens der Belüftungsrohre in die Rottemiete mit anschließendem Entfernen erheblich.

Es hat sich darüber hinaus gezeigt, daß bei druckluftbetriebenen Systemen eine Störung der Mikroorganismen durch kreisförmig aus dem Rohr austretende Druckimpulse auftritt, wodurch die Temperatur als Indikator und Gradmesser der Aktivität der Mikroorganismen in der Rottemiete nur etwa ein Viertel der ansonsten erreichbaren Rottetemperatur beträgt. Problematisch sind letztendlich die hohen Kosten für die einzelnen mit Belüftungsrohren zu versehenden Druckkessel, die in großer Zahl auf den Rottemieten plaziert werden müssen, einschließlich des Zeitaufwands für die Installation, die Funktionsüberwachung und die erwähnte Demontage nach Abschluß der Rotte.

Der vorstehend beschriebene Stand der Technik ist beispielsweise aus der DE 196 18 130 C2 bekannt. Dieses gattungsgemäße Belüftungssystem zielt auf einen Rottebehälter und dessen Belüftung. Konkret kann die Zuluft von Belüftungsrohren oder Endrohren zunächst in eine zugehörige Druckkammer strömen, wobei die Druckkammer mit daran anschließenden Luftverteilungskammern in Verbindung steht. Der Volumenstrom durch die Belüftungsrohre und/oder Endrohre ist einstellbar.

Die Frage der optimalen Belüftung und Durchströmung des Rottegutes ist Gegenstand der DE 196 43 142 C1. Dort wird als Problem herausgestellt, daß im Randbereich die Belüftung im Regelfall intensiver ist als in der Mitte. Aus diesem Grund sollen mittige Gasführungskanäle vorgesehen sein, die mit Ventilatoren einer höheren Leistung in Verbindung stehen.

Zum Stand der Technik sei weiterhin auf die DE 196 53 116 A1 verwiesen. Diese Lehre betrifft einen Behälter zum Kompostieren von Abfällen, wobei der Behälter eine Lufteinrichtung, eine Ablufteinrichtung und einen Lochboden besitzt. Zur Verbesserung der Belüftung ist unter dem Lochboden ein Gasführungskanal angeordnet, der mehrere Auslässe aufweist.
Bei der bioaktiven Behandlungsanlage nach DE 44 16 686 A1 ist ein luftdurchlässiges, auf einem luftdurchlässigen Bettträger aufruhendes und durch diesen hindurch von unten her zwangsbelüftetes, flächiges Bett aus biologischem Luftfiltermaterial bekannt. Eine Befeuchtungseinrichtung ist in der Luftzuführung zu dem Bettträger angeordnet. Damit entfällt die Gefahr eines Einfrierens der Befeuchtungseinrichtung wie auch eines unterseitigen Austrocknens des Bettes.

Aus dem Vorgenannten ist es daher Aufgabe der Erfindung, eine weiterentwickelte Belüftungsanordnung für Rottemieten oder dergleichen Deponien sowie ein Verfahren zum Betreiben einer derartigen Anordnung anzugeben, das es gestattet, die Vorteile bekannter Belüftungstechniken zu vereinen, ohne daß beim Errichten der Rotte und deren Betrieb zu hohe Kosten entstehen. Weiterhin soll mit der neuartigen Belüftungsanordnung die Reifezeit der in der Rotte befindlichen Stoffe für deren Umsetzung optimiert werden, ohne daß zusätzliche Maßnahmen wie künstliche Temperaturerhöhung oder Injektion von Mikroorganismen erforderlich werden. Letztendlich soll eine Belüftungsgrundkonstruktion unter vielfältigen klimatischen Verhältnissen universell verwendbar sein.

Die Lösung der Aufgabe der Erfindung erfolgt mit einer Belüftungsanordnung für Rottemieten oder dergleichen Deponien gemäß den Merkmalen des Patentanspruchs 1 sowie mit einem Verfahren definiert im Patentanspruch 14, wobei die Unteransprüche mindestens zweckmäßige Ausgestaltungen und Weiterbildungen der Erfindung beinhalten.

Der Grundgedanke der Erfindung besteht darin, daß während der Intensivrottezeit eine spezielle Zwangsbelüftung erfolgt, wobei in der anschließenden Reifezeit das System nach Art einer natürlichen Kaminzugbelüftung arbeitet. Bei der Zwangsbelüftung wird in die einzelnen Belüftungskanäle mit Belüftungskammern am Grund der Rottemiete in wählbaren Abständen stoßweise Druckluft eingebracht, ohne daß sich für Mikroorganismen schädliche Druckstöße ergeben. Durch die Möglichkeit eines gezielten Absperrens und einer Luftdurchfluß-Mengenregelung wird die Rottemiete gleichmäßiger durchlüftet. Der sich im Lüftungsschacht ergebende Überdruck läßt die Luft gleichmäßiger durch die Rottemiete nach oben abziehen. Die Belüftungskammervolumina bilden ein quasi Druckluftkissen, das über die Zeit abgebaut wird, so daß die gewünschte gleichmäßige Durchlüftung mit vertretbarem Energieaufwand erreicht werden kann.

Bauseits können die Belüftungskanäle mit Belüftungskammern, aber auch die vorgesehenen Ablaufrinnen im Ortbeton ausgebildet werden oder vor Ort unter Nutzung von Beton- oder sonstigen Fertigteilen errichtet werden. Vorhandene Tragplatten decken die Belüftungskanäle und die Ablaufrinnen luft- und feuchtedurchlässig ab, wodurch beim Aufbau der Rotte diese problemlos mit Radladern oder dergleichen befahren werden kann.

Aufgefangenes Sickerwasser kann zum Befeuchten der Rotte von innen, aber auch gegebenenfalls unter Beimengung von Frischoder Brauchwasser zum Beregnen der Rotte, d.h. zum Anfeuchten von außen Verwendung finden.

Wie bereits erwähnt, sind im Belüftungskanal durch im wesentlichen quer zur Kanallängsrichtung verlaufende Trennwände Belüftungskammern gebildet, wobei in jede Belüftungskammer ein dort endendes Belüftungsrohr führt.
Die Belüftungsrohre sind speiseseitig über ein Absperrventil und/oder einen Durchflußmengenregler mit einer Zwangsluft-Versorgungssammelleitung in Verbindung stehend. Die Zwangsluft-Versorgungsleitung kann an einen Druckkessel oder einen Kompressor angeschlossen sein.

Zu jeder Belüftungskammer führt ein absperrbares Sickerwasser-Ablaufrohr, welches ausgangsseitig in eine Entwässerungseinrichtung oder einen Entwässerungskanal mündet. Die Sickerwasser-Ablaufrohre besitzen bevorzugt eine Sickerwasser-Eintrittsöffnung, deren Höhe über Grund des Belüftungskanals zur Einstellung eines Sickerwasser-Restspiegels im jeweiligen Kanal oder der jeweiligen Kammern vorgeb- oder wählbar ist. Der Sickerwasser-Restspiegel kann dann zu einem Befeuchten der Rotte von innen mittels eines gezielten Druckluftstoßes genutzt werden.

Den Belüftungskanälen benachbart sind trennwandfreie Ablaufrinnen für Sickerwasser angeordnet, die an den jeweiligen Stirnseiten mit einer Abdeckung versehen sind. An oder in der Abdeckung werden Absperrschieber vorgesehen, mit deren Hilfe ein Entwässern hinein zum erwähnten Kanal erreichbar ist. Für den Fall, daß aus statischen Gründen die Ablaufrinnen querversteift werden müssen, ist für einen Sickerwasser-Durchtritt in Längsrichtung der Rinne Sorge zu tragen.

Die vorstehend kurz beschriebene Belüftungsanordnung ermöglicht einerseits eine Zwangsluftzuführung als auch andererseits eine Kaminbelüftung der Rotte je nach deren Verrottungszustand und/oder den klimatischen Umgebungsbedingungen.

Bevorzugt enden die Belüftungsrohre derart im vorderen Belüftungskammerbereich, daß bei Zwangsbelüftung sich das erwähnte Druckluftbett oder Druckluftkissen zum anschließenden, gleichmäßigen, homogenen Durchströmen der Rotte aufbaut.

Die Anzahl und der Querschnitt der Belüftungs- und Sickerwasser-Ablaufrohre im jeweiligen Kanal ist so gewählt, daß die Kammerluftvolumina nicht wesentlich eingeschränkt sind. Es erfolgt also hier ein Abstimmen der wirksamen Querschnitte und der Flächen der Kammern bezogen auf den Bauraum, der von den Rohren eingenommen wird. Um ein ausreichendes Druckkissen beim stoßweisen Beaufschlagen mit Zwangsluft zu erreichen, können unter Berücksichtigung der Tatsache, daß im Bereich zur Versorgungssammelleitung hin mehrere Rohre die Kammern durchdringen, die Längen oder Tiefen der Kammer unterschiedlich gewählt werden. Beispielsweise ist denkbar, die an die Versorgungssammelleitung angrenzende Kammer mit einer größeren Länge, also einem größeren Abstand zwischen den Trennwänden auszubilden, um hier ein gleiches Luftvolumen bezogen auf die Volumina der benachbarten oder sich anschließenden Kammern zu erreichen.

Die Sickerwasser-Ablaufrohe sind bevorzugt so in den Kanälen fixiert, daß diese in Gefällerichtung im vorderen Teil der jeweiligen Belüftungskammer enden.

Um einen einfachen manuellen, aber auch automatischen Betrieb zu gewährleisten, sind die Absperrventile und/oder die Durchflußmengenregler elektrisch ansteuerbar. Selbstverständlich ist unter Berücksichtigung des Aufbauorts der Rotte auch ein manueller oder Notbetrieb der Ventile und Regler gewährleistet.

Die Belüftungskanäle und die Ablaufrinnen sind alternierend angeordnet und verlaufen bevorzugt parallel zueinander, wobei Entwässerungskanal und Zwangsluft-Versorgungssammelleitung auf einer Längsseite der Rotte oder aber auch gegenüberliegend befindlich anordenbar sind.

Die Belüftungsrohre weisen luftausgangsseitig einen Verteilerkopf oder eine Verteilerdüse auf, mit deren Hilfe ein druckluftunterstütztes Zerstäuben von Sickerwasser zur inneren Befeuchtung der Rotte in leichter Weise möglich ist.

Zur Verbesserung der Durchströmung der Rotte können die Tragplatten strömungsleitende Durchbrüche oder Öffnungen besitzen, die insbesondere auf die unterschiedlichen Strömungswege und Strömungswiderstände je nach Abstand der Drucklufteinspeisung zur rotteseitigen Öffnung der Tragplatte ausgebildet sind.

Durch im Rotteninneren vorgesehene Temperatur- und/oder Gassensoren kann eine optimale Steuerung der Belüftung und/oder Bewässerung der Rotte erfolgen. Diese Steuerung kann in Verbindung mit den elektrisch betätigbaren Ventilen und Reglern automatisiert oder teilautomatisiert umgesetzt sein, wobei jederzeit ein manueller Eingriff in die Steuerung sichergestellt ist.

Zur Ermittlung der Temperatur im Rotteinneren ist bevorzugt ein faseroptisches Sensorkabel geeignet. In dieses Sensorkabel wird mit kommerziell erhältlichen Einrichtungen ein Laserimpuls eingespeist und die Raman-Rückstreuung ermittelt. Die Rücksteuerungswerte sind laufzeit- und temperaturabhängig, so daß nicht nur die Durchschnittstemperatur in der Rotte ermittelt werden kann, sondern auch Temperaturpeaks und deren räumliche Lage in der Rotte bestimm- und zur Belüftungssteuerung nutzbar sind.

Bei dem Verfahren zum Betreiben der vorstehend beschriebenen Belüftungsanordnung für Rottemieten oder dergleichen Deponien wird während der Intensivrottezeit eine impulsartige oder stoßweise Zwangsbelüftung mittels der Belüftungsrohre und der Kammern vorgenommen, wobei sich in den Kammervolumina ein langsam abbauendes Druckpolster einstellt. Hierdurch ist eine gleichmäßige Durchlüftung mit einem geringeren Energieeinsatz im Vergleich zum Stand der Technik gegeben.
Während der Reifezeit wird überwiegend oder ausschließlich eine Belüftung im Kaminbetrieb vorgenommen, wobei diese natürliche Belüftung über eine Öffnung der Absperrschieber in den Sickerwasser-Ablaufrohren und/oder in den seitlichen Abdeckungen der Ablaufrinnen realisierbar ist.

Die Zwangsluft-Versorgungssammelleitung ist an einen Kompressor oder einen Druckluftspeicher angeschlossen, wobei die Absperrventile und Durchflußmengenregler je nach gemessener Rottetemperatur und/oder Gasbildung in der Rotte automatisch oder manuell gleichzeitig oder nacheinander geöffnet und geschlossen werden, so daß das gewünschte impulsartige und stoßweise Zwangsbelüften erreicht werden kann.

Bei einer verfahrensseitigen Ausgestaltung besteht die Möglichkeit, daß zusätzlich zur Temperatur- und/oder Gasbildungssteuerung eine Zeittaktsteuerung der Zwangsbelüftung eingestellt wird. Diese Zeittaktsteuerung kann auch alternativ Anwendung finden, wobei die Rottetemperatur oder die Gasbildung von Zeit zu Zeit manuell durch Begehung überprüft wird.

Das in den Belüftungskammern abgesetzte Sickerwasser kann durch gezielte Druckluftzufuhr zerstäubt werden, wodurch eine besonders vorteilhafte Bewässerung oder Befeuchtung der Rotte von innen her möglich wird. Eine Bewässerung von außen erfolgt beispielsweise durch in der Entwässerungseinrichtung aufgefangenes Sickerwasser, welchem gegebenfalls Frisch- oder Brauchwasser beigemengt wird, mit anschließendem Verregnen über der Rotte.

Beim Aufbau der Rotte kann grobe oder mit größerem Strukturmaterial versetzte Organik in bestimmter Höhe auf dem mit dem Belüftungssystem ausgestatteten Deponiegrund abgelagert werden. Vorzugsweise ist das bei der Absiebung erhaltene Überkorn verwendbar. Die mit Strukturmaterial versetzte Organik nimmt die aus den Kanälen oder Kammern aufstrebende Frischluft auf und verteilt sie durch die Strukturzwischenräume gleichmäßig und gibt die Luft an die mit kleinerem Strukturmaterial versehene, darüberliegende Rotteschicht ab.

Eine vorzugsweise aus durchgerottetem Material bestehende Mietenabdeckung wirkt als Biofilter und verhindert unerwünschte Geruchsbelästigung. Gleichzeitig wird mit der Mietenabdeckung der Lebensraum für Ungeziefer beeinträchtigt und ein Schutz vor Austrockung der Miete oder deren zu starke Abkühlung erreicht.

Bei einer weiteren Ausführungsform kann die Rottemiete auch mit assimilierendem, d.h. dampfdurchlässigem, aber wasserundurchlässigem Gewebe abgedeckt und auf diese Weise gegen übermäßige Wasserzufuhr durch Regen und Schnee geschützt werden. Der Luftaustritt kann bei dieser Art der Abdeckung zusätzlich über dezentral angeordnete Ausströmöffnungen mit Biofiltern erfolgen. Bei den beschriebenen Geweben ist die Fadenstruktur so gewählt, daß Wassertropfen von der äußeren Oberfläche abgestoßen werden und daher nicht das Gewebe durchdringen, hingegen Wasserdampfmoleküle die im Gewebe enthaltenen Feinporen durchdringen können.

Die Erfindung soll anhand eines Ausführungsbeispiels unter Zuhilfenahme von Figuren näher erläutert werden.

Hierbei zeigen:
- Fig. 1: eine prinzipielle Schnittdarstellung durch eine Belüftungsanordnung einer Rottemiete und
- Fig. 2: eine Draufsicht auf ein Teil der Belüftungsanordnung mit Belüftungskanal und Sickerwasser-Ablaufrinne.

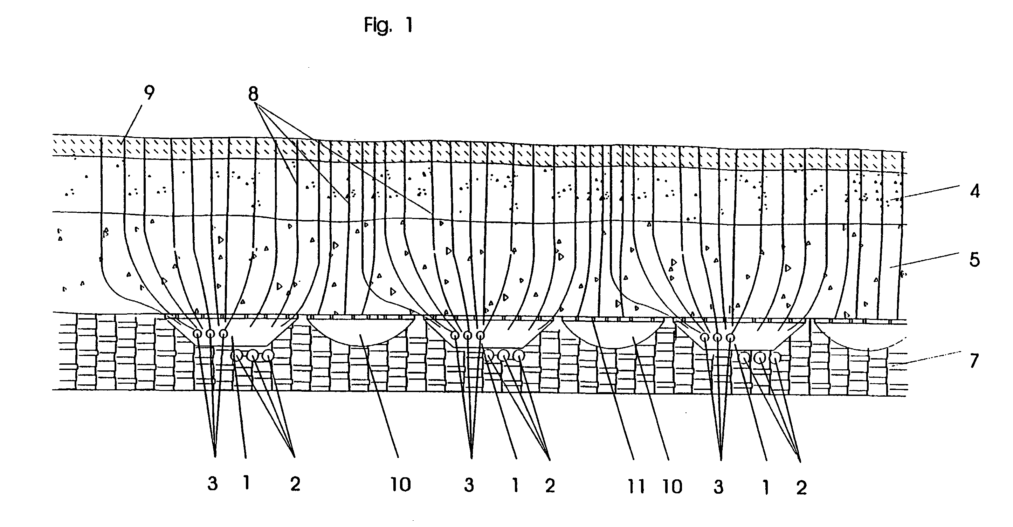

Fig. 1 zeigt eine Schnittdarstellung durch eine Rottemiete mit Belüftungsanordnung.

In einem befestigten, wasserundurchlässigen Deponiegrund 7 sind in alternierender Folge Belüftungskanäle 1 und Ablaufrinnen 10 für Sickerwasser angeordnet bzw. eingebracht.

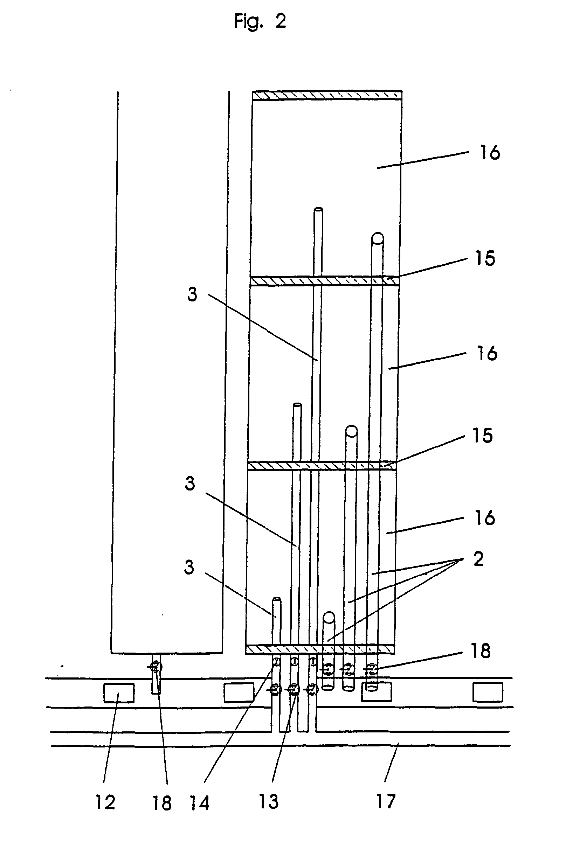

Sickerwasser-Ablaufrohre 2 werden von unten zum jeweiligen Belüftungskanal 1 geführt, wobei Sickerwasser-Eintrittsöffnungen (siehe Fig. 2) in den Kanal 1 hineinreichen. Die Lage der in der Fig. 2 ersichtlichen Öffnungen der Sickerwasser-Ablaufrohre 2 ist bevorzugt so gewählt, daß diese sich in Gefällerichtung im vorderen Teil einer Belüftungskammer 16 befindet.

Innerhalb der Belüftungskanäle 1 verlaufen mehrere Belüftungsrohre 3, die jeweils in einer der Kammern 16 enden. Das luftaustrittsseitige Ende der Belüftungsrohre 3 liegt bevorzugt im vorderen Belüftungskammerbereich, so daß bei Zwangsbelüftung sich ein Druckluftbett oder Druckluftkissen innerhalb der Kammer aufbauen kann.

Die Belüftungskanäle 1 bzw. die Ablaufrinnen 10 für Sickerwasser sind mit einer Tragplatte 11 abgedeckt, welche luft- und feuchtedurchlässig ist und die hierfür Durchbrüche oder Öffnungen aufweist, welche auch strömungsleitende Funktion haben können.

Die Luftströmung ausgehend von den Belüftungsrohren 3 ist mit den Linien 8 symbolisiert.

Die Rottemiete ist vorzugsweise so aufgeschüttet, daß grobe oder mit gröberem Strukturmaterial 5 versetzte Organik in bestimmter Höhe auf dem mit dem Belüftungssystem ausgestatteten Deponiegrund 7 abgelagert wird. Die Höhe der Rotteschicht aus gröberem Material ist abhängig von der Zusammensetzung desselben und der anfallenden Menge. Vorzugsweise ist das bei der Absiebung ausgesiebte Überkorn verwendbar. Eine Rotteschicht aus feinerem Material 4 befindet sich oberhalb der Grobrotteschicht. Die Rotteschicht 4 kann zur besseren Durchlüftung mit Strukturmaterial versetzt sein.

Eine vorzugsweise aus durchgerottetem Material bestehende Mietenabdeckung 9 wirkt als Biofilter und verhindert Geruchsbelästigung. Gleichzeitig schützt die Abdeckung 9 die Miete vor Austrocknung und verhindert eine übermäßige Abkühlung dieser.

Denkbar ist darüber hinaus eine äußere Mietenabdeckung aus einem Gewebe oder einer Folie, die in der Lage ist, Wasserdampf aus der Miete austreten zu lassen, andererseits jedoch ein zu starkes Durchfeuchten der Miete durch Regen und/oder Schnee verhindert.

Fig. 2 läßt einen Ausschnitt der Belüftungsanordnung für Rottemieten als Draufsicht erkennen.
Eine beispielhafte Ablaufrinne (Bezugszeichen 10 nach Fig. 1) befindet sich beabstandet und im wesentlichen parallel verlaufend neben dem Belüftungskanal 1.

Im Inneren des Belüftungskanals 1 sind Trennwände 15 angeordnet, so daß die Kammern 16 gegeneinander abgedichtet entstehen.

Die Belüftungsrohre 3 erstrecken sich so innerhalb des Belüftungskanals 1, daß jeweils ein Belüftungsrohr mit einer Belüftungsöffnung in einer der Kammern 16 endet. In gleicher Weise sind die Sickerwasser-Ablaufrohre 2 entweder von unten in die Kammern hineingeführt oder innerhalb der Kanäle 1 verlegt.

Die Sickerwasser-Ablaufrohre 2 verfügen jeweils über einen Absperrschieber 18, um eine Entwässerung hinein in einen Kanal 12 mit Senkgruben zu ermöglichen.

Die Belüftungsrohre 3 wiederum besitzen Absperrventile 13 sowie Durchflußmengenregler 14.

Die jeweilige Ablaufrinne 10 für Sickerwasser ist ebenfalls durch einen Absperrschieber sperrbar, um ein gezieltes Entwässern vornehmen zu können, andererseits aber auch sicherzustellen, daß nicht unerwünscht zugeführte Zwangsluft über die Ablaufrinne austritt.
Mit Öffnung der Absperrschieber 18 der Ablaufrinne und/oder des Belüftungskanals bzw. der -kanäle kann eine natürliche Luftzufuhr unter Ausnutzung des Kamineffekts erfolgen.

Die einzelnen Belüftungsrohre 3 sind an eine Zwangsluft-Versorgungssammelleitung 17 angeschlossen, die zu einem Kompressor oder einem Druckspeicher (nicht gezeigt) führt.

Die Absperrventile 13 können auch mehrere der Belüftungsrohre 3 z.B. über ein T-Stück versorgen, so daß mehrere Kammern 16 gleichzeitig belüftet werden können. Auf diese Weise läßt sich der konstruktiv-technische Aufwand reduzieren.

Bei einer Ausführungsform kann der wasserundurchlässige Deponiegrund 7 aus Ortbeton bestehen, wobei die Ablaufrinnen 10 mit einem leichten Gefälle in Richtung zum Kanal 12 ausgeführt sein können.

Die Breite der Belüftungskammern liegt beispielsweise zwisehen 0,2 und 1,2m, wobei die Länge je Kammer im Bereich zwischen 1 und 20m liegt. In dem Fall, wenn in Längsrichtung Zwischenstützen zur Aufnahme der darüberliegenden Rottelasten eingesetzt werden, kann die Breite der Kammern 16 auch größer gewählt werden. Die Tiefe der Belüftungskammern 16 hängt von der Kammeranzahl eines Kanals und den in entsprechender Anzahl notwendigen Belüftungsrohren 3 bzw. den Sickerwasser-Ablaufrohren 2 ab, wobei zu beachten gilt, daß der Luftraum nicht unnötig durch die verlegten Rohre einzuschränken ist.

Die Ablaufrinnen 10 können aus in den Boden eingelassenen Halbrohren bestehen. Nach Abschluß der Intensivrottezeit mit zwangsbelüftung können die Ablaufrinnen in Verbindung mit den geöffneten Absperrschiebern 18 zur Belüftung genutzt werden. In diesem Fall wird die Rottemiete nach dem erwähnten Kaminzugsystem belüftet. Eine ergänzende Unterstützung der Belüftung über die Rohre 3 ist selbstverständlich weiterhin möglich.

Wie erläutert, sind die Belüftungsrohre 3 durch die Absperrventile 13 von der durch einen Kompressor unter Druck gesetzten Zwangsluft-Versorgungssammelleitung 17 getrennt. Nach Öffnung der Ventile 13 erfolgt in einem bestimmten Zeittakt eine Luftzufuhr in die Belüftungskammern 16 hinein, wobei die Zeittakte unter Berücksichtigung der in der Rotte gemessenen Temperatur und in Abhängigkeit von der Gasbildung bestimmbar sind. Durch die Durchflußmengenregler 14 ist die Luftmenge einstellbar, die je Zeittakt in die jeweilige Belüftungskammer 16 einströmt, so daß eine individuelle Anpassung an die jeweils herrschenden Bedingungen in der Rotte respektive die klimatischen Umgebungsbedingungen möglich ist.

Aufgrund des Strömungswiderstands in der Rottemiete ergibt sich bei gegebener Luftzufuhr in den jeweiligen Belüftungskammern 16 ein Überdruck, der durch nachfolgende Luftabgabe an die Rottemiete über die Zeit langsam abnimmt. Hierdurch wird die gesamte Fläche oberhalb der Belüftungskanäle ausreichend belüftet, wobei mit Zunahme der Luftsauerstoffzufuhr je Belüftungskammer 16 auch ein höherer Rottemieteaufbau denkbar ist.

Mit der vorgestellten Belüftungsanordnung kann also während der Intensivrottezeit eine impulsartige oder stoßweise Zwangsbelüftung mittels der Belüftungsrohre und der Belüftungskammern erfolgen, wobei sich in den Kammervolumina ein sich langsam abbauendes Druckpolster einstellt, um eine gewünschte gleichmäßige Durchlüftung bei relativ geringem Energieeinsatz zu erreichen.

Während der Reifezeit erfolgt überwiegend oder ausschließlich ein Kaminbetrieb der Rotte, wobei eine natürliche Belüftung über die geöffneten Absperrschieber 18 in den Sickerwasser-Ablaufrohren 2 und/oder den Absperrschiebern 18 möglich ist, die in seitlichen Abdeckungen der Ablaufrinnen 10 eingebaut sind.

Beim Aufschichten der Rotte können z.B. mäanderförmig faseroptische Sensorkabel verlegt werden, um eine Temperaturerfassung auch hinsichtlich einer örtlichen und zeitlichen Verteilung zu ermöglichen, so daß der Betrieb insbesondere flächig ausgedehnter Rotten in optimaler Weise möglich wird.

Das beschriebene Verfahren und das Belüftungs- bzw. Befeuchtungssystem kann ebenso für geschlossene Rotteboxen Anwendung finden. Bei einem Ausführungsbeispiel ist eine großflächige Rottebox in den Abmessungen im Bereich von im wesentlichen 40 bis 120 Metern vorgesehen. Die geschlossene Box ist so ausgeführt, daß Abluft von einem Kompressor angesaugt wird und ein Wiederverwertungs-Luftkreislauf entsteht. Der Sauerstoffgehalt des Luftstromes wird ständig bestimmt und bei Bedarf frischer Sauerstoff zugführt. Der TOC-Gehalt, die Anteile halogenierter und aromatischer Kohlenwasserstoffe, Terpene, organische Schwefelverbindungen und weitere in der angesaugten, den Rottekörper bereits mehrfach durchdrungenen Abluft wird in regelmäßigen Abständen ermittelt. Bei einer Überlastung mit Schadstoffen wird die Abluft mittels motorisch betriebener Schieber aus dem Kreislauf ausgeschleust und einer thermischen Behandlung zugeführt. Eine gleichmäßige Durchdringung des Deponiekörpers mittels Druckluft ermöglicht die oben beschriebene Handhabung der Abluft, so daß auch allen verschärften Umweltgesetzen entsprochen werden kann.

Alles in allem gelingt es mit der vorgestellten Erfindung, eine neuartige Belüftungsanordnung sowie ein Verfahren zum Betreiben dieser anzugeben, die bzw. das es gestattet, eine Rottemiete sehr gleichmäßig zu durchlüften, wobei auch in besonders einfache Weise eine Befeuchtung der Miete möglich ist. Durch die Verbesserung der Belüftung der Rotte kann im Vergleich zum Bekannten ein höherer Rottenaufbau realisiert werden.

## Patentansprüche

1. Belüftungsanordnung für Rottemieten oder dergleichen Deponien, wobei die Rottemiete auf einem befestigten, wasserundurchlässigen Deponiegrund (7) aufgeschichtet und im Fußbereich der Rottemiete mindestens ein nach oben und/oder seitlich luftdurchlässiger Belüftungskanal vorgesehen ist,
im Belüftungskanal (1) durch Trennwände (15) Belüftungskammern (16) gebildet sind, wobei zu jeder Belüftungskammer ein dort endendes Belüftungsrohr (3) führt und die Belüftungsrohre (3) speiseseitig über ein Absperrventil (13) und/oder einen Durchflußmengenregler (14) mit einer Zwangsluft-Versorgungssammelleitung (17) in Verbindung stehen,
**dadurch gekennzeichnet,**
**daß** zu jeder Belüftungskammer (16) zur Einstellung eines Sickerwasser-Restspiegels ein absperrbares Sickerwasser-Ablaufrohr (2) führt, welches jeweils ausgangsseitig in eine Entwässerungseinrichtung oder einen Entwässerungssammelkanal mündet, daß den Belüftungskanälen (1) benachbart trennwandfreie Ablaufrinnen (10) für Sickerwasser verlaufen, welche an den jeweiligen Stirnseiten mit einer Abdeckung versehen sind und an oder in mindestens einer der seitlichen Abdeckungen ein Absperrschieber (18) befindlich ist, um die Rottemiete je nach Verrottungszustand und/oder klimatischen Bedingungen sowohl mit Zwangsluft über die Belüftungsrohre (3) als auch kaminbelüftbar nach Öffnung des Absperrschiebers (18) zu betreiben, sowie weiterhin über den Sickerwasser-Restspiegel innerhalb der Belüftungskanäle (1) durch Druckluftstoß über die Belüftungsrohre (3) und dort luftausgangsseitig befindliche Verteilerköpfe oder -düsen ein Befeuchten der Rottemiete von innen erfolgt.

2. Belüftungsanordnung nach Anspruch 1,
**dadurch gekennzeichnet, daß**
die Belüftungskanäle (1) und/oder die Ablaufrinnen (10) in einen Ortbeton bauseitig eingebracht oder daß die Kanäle und/oder Rinnen als vorgefertigte Teile vor Ort verlegt sind.

3. Belüftungsanordnung nach Anspruch 1 oder 2,
**dadurch gekennzeichnet, daß**
die Belüftungsrohre (3) im vorderen Belüftungskammerbereich enden.

4. Belüftungsanordnung nach einem der vorangegangenen Ansprüche,
**dadurch gekennzeichnet, daß**
die jeweiligen Kammerluftraumvolumina in Abhängigkeit vom Bauraumbedarf der Rohre in den Kammern (16) durch Wahl der Längen- und Tiefenabmessungen der jeweiligen Kammern (16) nahezu gleich gestaltet sind.

5. Belüftungsanordnung nach einem der vorangegangenen Ansprüche,
**dadurch gekennzeichnet, daß**
die Sickerwasser-Ablaufrohre (2) in Gefällerichtung im vorderen Teil der jeweiligen Belüftungskammer (16) enden.

6. Belüftungsanordnung nach einem der vorangegangenen Ansprüche,
**dadurch gekennzeichnet, daß**
die Absperrventile (13) und/oder Durchflußmengenregler (14) elektrisch ansteuerbar sind.

7. Belüftungsanordnung nach einem der vorangegangenen Ansprüche,
**dadurch gekennzeichnet, daß**
die Belüftungskanäle (1) und Ablaufrinnen (10) mit einer luft- und feuchtedurchlässigen Tragplatte abgedeckt sind.

8. Belüftungsanordnung nach einem der vorangegangenen Ansprüche,
**dadurch gekennzeichnet, daß**
die Belüftungskanäle (1) und Ablaufrinnen (10) alternierend angeordnet sind und bevorzugt parallel zueinander verlaufen.

9. Belüftungsanordnung nach einem der vorangegangenen Ansprüche,
**dadurch gekennzeichnet, daß**
die Sickerwasser-Ablaufrohre (2) eine Sickerwasser-Eintrittsöffnung aufweisen, deren Höhe über Grund des Belüftungskanals zur Einstellung des Sickerwasser-Restspiegels im jeweiligen Kanal oder der jeweiligen Kammer vorgeb- oder wählbar ist.

10. Belüftungsanordnung nach Anspruch 7,
**dadurch gekennzeichnet, daß**
die Tragplatte strömungsleitende Durchbrüche oder Öffnungen aufweist.

11. Belüftungsanordnung nach einem der vorangegangenen Ansprüche,
**dadurch gekennzeichnet, daß**
im Rotteninneren Temperatur- und/oder Gassensoren zur Steuerung der Belüftung und/oder Bewässerung der Rotte angeordnet oder einbringbar sind.

12. Belüftungsanordnung nach Anspruch 11,
**dadurch gekennzeichnet, daß**
beim Rotteaufbau ein faseroptisches Sensorkabel zur Temperaturverlaufserfassung aufgrund der Ermittlung von Raman-Rückstreuung verlegt ist.

13. Verfahren zum Betreiben einer Belüftungsanordnung für Rottemieten oder dergleichen Deponien nach einem der Ansprüche 1 bis 12,
**dadurch gekennzeichnet, daß**
während der Intensivrottezeit eine impulsartige oder stoßweise Zwangsbelüftung mittels der Belüftungsrohre (1) und der Kammern sowie ein gezieltes Befeuchten von innen durch Nutzung von innerhalb der Kammern zurückgehaltenem Sickerwasser erfolgt, wobei sich in den Kammervolumina ein zeitlich versetzt langsam abbauendes Druckpolster einstellt, so daß eine gleichmäßige Durchlüftung bei geringem Energieeinsatz möglich ist, und wobei während der Reifezeit überwiegend oder ausschließlich ein Kaminbetrieb der Rotte erfolgt, wobei eine natürliche Belüftung über eine Öffnung der Absperrschieber (18) in den Sickerwasser-Ablaufrohren (2) und/oder in den Abdeckungen der Ablaufrinnen realisiert wird.

14. Verfahren nach Anspruch 13,
**dadurch gekennzeichnet, daß**
die Zwangsluft-Versorgungssammelleitung (17)an einen Kompressor oder einen Druckluftspeicher angeschlossen ist, wobei die Absperrventile (13) und Durchflussmengenregler (14) je nach gemessener Rottetemperatur und/oder Gasbildung in der Rotte automatisch oder manuell bevorzugt mit dem Ziel der impulsartigen oder stoßweisen Belüftung betätigt werden.

15. Verfahren nach Anspruch 13,
**gekennzeichnet durch**
eine zusätzliche oder alternative Zeittaktsteuerung der Zwangsbelüftung.

16. Verfahren nach einem der Ansprüche 13 bis 15,
**dadurch gekennzeichnet, daß**
in den Belüftungskammern (16) abgesetztes Sickerwasser durch Druckluftzufuhr zerstäubt und damit die Rotte von innen bewässert wird.

17. Verfahren nach einem der Ansprüche 13 bis 16,
**dadurch gekennzeichnet, daß**
im Entwässerungskanal oder in der Entwässerungseinrichtung aufsgefangenes Wasser zur Beregnung der Rotte, gegebenenfalls unter Beimengung von Frischwasser oder Brauchwasser, verwendet wird.

## Claims

1. An aeration arrangement for digestion pits or similar waste disposal sites, with the digestion pit being arranged in layers on a stabilized water-impermeable disposal site foundation (7) and at least one aeration duct being provided in the bottom area of the digestion pit, which is air permeable in an upward and/or lateral direction,
aeration chambers (16) being formed in the aeration duct (1) by partition walls (15), with an aeration pipe (3) leading to each aeration chamber and ending therein, and the aeration pipes (3) communicating at their inlet side with a forced air supply manifold (17) via a shut-off valve (13) and/or a flow regulator (14),
**characterised in that**
a lockable seepage water waste pipe (2) for adjusting a seepage water residual level leads to each aeration chamber (16), which with its outlet side opens into a drainage system or into a collecting drain,
that adjacent to the aeration ducts (1) waste channels (10) without partition walls for seepage water are laid, which at their respective end faces are provided with a cover, and that at or within at least one of the lateral covers a shut-off valve (18) is arranged in order to operate the digestion pit, depending on the state of decay and/or climatic conditions, both with forced air via the aeration pipes (3) and stack aeration after opening the shut-off valve (18), and that further
a humidification of the digestion pit from the inside is effected via the seepage water residual level within the aeration ducts (1) by a compressed air surge through the aeration pipes (3) and manifold heads or jets arranged at the air outlet.

2. The aeration arrangement according to Claim 1,
**characterised in that**
the aeration ducts (1) and/or the waste channels (10) are installed in a cast-in-place concrete on site or that the ducts and/or the channels are laid as pre-manufactured parts on site.

3. The aeration arrangement according to Claim 1 or 2,
**characterised in that**
the aeration pipes (3) terminate in the front aeration chamber area.

4. The aeration arrangement according to one of the previous claims,
**characterised in that**
the respective chamber air space volumes depending on the installation space requirement of the pipes in the chambers (16) are designed nearly identical by the selection of the length and depth dimensions of the respective chambers (16).

5. The aeration arrangement according to one of the previous claims,
**characterised in that**
the seepage water waste pipes (2) in the direction of the gradient terminate in the front portion of the respective aeration chamber (16).

6. The aeration arrangement according to one of the previous claims,
**characterised in that**
the shut-off valves (13) and/or the flow regulators (14) can be electrically driven.

7. The aeration arrangement according to one of the previous claims,
**characterised in that**
the aeration ducts (1) and/or the waste channels (10) are covered by an air and humidity permeable supporting plate.

8. The aeration arrangement according to one of the previous claims,
**characterised in that**
the aeration ducts (1) and/or the waste channels (10) are arranged alternately and preferably extend parallel to each other.

9. The aeration arrangement according to one of the previous claims,
**characterised in that**
the seepage water waste pipes (2) comprise a seepage water inlet opening whose elevation above ground of the aeration duct can be pre-specified or selected for the adjustment of the seepage water residual level.

10. The aeration arrangement according to Claim 7,
**characterised in that**
the supporting plate comprises flow-guiding break-throughs or openings.

11. The aeration arrangement according to one of the previous claims,
**characterised in that**
temperature and/or gas sensors are arranged or can be inserted in the biomass interior for controlling the aeration and/or irrigation of the biomass.

12. The aeration arrangement according to Claim 11,
**characterised in that**
upon the build-up of the biomass a fibre optic sensor cable for detecting the temperature variation based on the determination of the Raman back-scattering is installed.

13. A method for operating an aeration arrangement for digestion pits or similar waste disposal sites according to one of Claims 1 to 12,
**characterised in that**
during the intensive digestion time a pulse-type or surge-type forced aeration by means of the aeration pipes (1) and the chambers as well as a controlled irrigation from the inside by utilising the seepage water retained in the chambers is effected, with a pressure accumulation being generated in the chamber volumes which is slowly decreasing in a time displaced manner so that a uniform aeration with low energy requirements is possible, and wherein during the ripening time predominantly or exclusively a stack operation of the biomass is effected, with a natural aeration being realised by means of opening the shut-off valves (18) in the seepage water waste pipes (2) and/or in the covers of the waste channels (10).

14. The method according to Claim 13,
**characterised in that**
the forced air supply manifold (17) is connected with a compressor or a compressed air accumulator, with the shut-off valves (13) and the flow regulators (14) being automatically or manually operated, preferably with the intention of the pulse-type or surge-type aeration.

15. The method according to Claim 13,
**characterised by**
an additional or alternative clock control of the forced aeration.

16. The method according to one of Claims 13 to 15,
**characterised in that**
seepage water accumulated in the aeration chambers (17) is atomised by a compressed air supply and thereby the biomass is irrigated from inside.

17. The method according to one of Claims 13 to 16,
**characterised in that**
water collected in the drain channel or in the drainage system is used for sprinkling of the biomass, if required, mixed with non-potable or raw water.

## Revendications

1. Système d'aération pour silos de compostage ou pour décharges similaires, dans lequel :
- le silo de compostage est empilé sur un sol de décharge (7) consolidé et imperméable à l'eau et au moins un canal d'aération perméable à l'air vers le haut et/ou sur le côté est prévu dans la zone d'embase du silo ;
- des chambres d'aération (16) sont formées dans le canal d'aération (1) par des cloisons de séparation (15), dans lequel un tube d'aération (3) mène à chaque chambre d'aération et s'y termine ; et
- les tubes d'aération (3) sont en liaison avec une conduite collectrice d'alimentation à ventilation forcée (17) du côté alimentation via une vanne d'arrêt (13) et/ou un régulateur de débit (14),
**caractérisé en ce que** :
- un tube d'écoulement obturable pour l'eau d'infiltration (2) qui débouche respectivement du côté de la sortie dans un dispositif de drainage ou dans un canal collecteur de drainage, mène à chaque chambre d'aération (16) pour établir un niveau résiduel d'eau d'infiltration ;
- des rigoles d'écoulement (10) pour l'eau d'infiltration, dépourvues de cloisons de séparation, s'étendent au voisinage des canaux d'aération (1), lesdites rigoles étant munies d'un couvercle sur les parties frontales respectives et un tiroir d'arrêt (18) se trouvant sur ou dans au moins un des couvercles latéraux desdites rigoles, pour faire fonctionner le silo de compostage aussi bien par aération forcée via les tubes d'aération (3) que par effet de cheminée après l'ouverture du tiroir d'arrêt (18), selon l'état de décomposition et/ou les conditions climatiques ; et
- une humidification du silo de compostage est exécutée en outre depuis l'intérieur au moyen du niveau résiduel d'eau d'infiltration à l'intérieur des canaux d'aération (1), par soufflage de bouffées d'air comprimé via les tubes d'aération (3) et des buses ou des têtes distributrices se trouvant à cet endroit du côté de la sortie d'air.

2. Système d'aération selon la revendication 1, **caractérisé en ce que** les canaux d'aération (1) et/ou les rigoles d'écoulement (10) sont noyés du côté construction dans du béton coulé sur site ou les canaux et/ou les rigoles sont posés sur site comme éléments préfabriqués.

3. Système d'aération selon l'une ou l'autre des revendications 1 et 2, **caractérisé en ce que** les tubes d'aération (3) se terminent dans la zone avant de la chambre d'aération.

4. Système d'aération selon l'une des revendications précédentes, **caractérisé en ce que** les volumes respectifs de l'espace d'air des chambres sont configurés de manière pratiquement identique en fonction de l'espace de construction requis par les tubes dans les chambres (16), par le choix des dimensions en longueur et en profondeur des chambres respectives (16).

5. Système d'aération selon l'une des revendications précédentes, **caractérisé en ce que** les tubes d'écoulement pour l'eau d'infiltration (2) se terminent dans la partie avant de la chambre d'aération respective (16), dans la direction de la pente.

6. Système d'aération selon l'une des revendications précédentes, **caractérisé en ce que** les vannes d'arrêt (13) et/ou les régulateurs de débit (14) peuvent être pilotés électriquement.

7. Système d'aération selon l'une des revendications précédentes, **caractérisé en ce que** les canaux d'aération (1) et les rigoles d'écoulement (10) sont recouverts par une plaque portante perméable à l'air et à l'humidité.

8. Système d'aération selon l'une des revendications précédentes, **caractérisé en ce que** les canaux d'aération (1) et les rigoles d'écoulement (10) sont agencés en alternance et s'étendent de préférence parallèlement les uns aux autres.

9. Système d'aération selon l'une des revendications précédentes, **caractérisé en ce que** les tubes d'écoulement pour l'eau d'infiltration (2) présentent une ouverture d'arrivée de l'eau d'infiltration dont la hauteur au-dessus du niveau du canal d'aération peut être prescrite ou choisie pour établir le niveau résiduel de l'eau d'infiltration dans le canal respectif ou dans la chambre respective.

10. Système d'aération selon la revendication 7, **caractérisé en ce que** la plaque portante présente des traversées ou des ouvertures qui conduisent l'écoulement.

11. Système d'aération selon l'une des revendications précédentes, **caractérisé en ce que** des capteurs de gaz et/ou de température sont agencés ou peuvent être montés à l'intérieur du silo pour commander l'aération et/ou l'irrigation dudit silo.

12. Système d'aération selon la revendication 11, **caractérisé en ce qu'**un câble de capteur à fibres optiques est posé lors du montage du silo pour saisir l'évolution de la température en raison de la détection de la rétrodiffusion de Raman.

13. Procédé pour faire fonctionner un système d'aération pour silos de compostage ou décharges similaires selon l'une des revendications 1 à 12, **caractérisé en ce que**, pendant le temps de compostage intensif, il est réalisé une aération forcée par impulsions ou par bouffées via les tubes d'aération (1) et les chambres ainsi qu'une humidification ciblée depuis l'intérieur en utilisant l'eau d'infiltration retenue à l'intérieur des chambres, procédure pendant laquelle :
- une pression tampon à diminution lente décalée temporairement s'établit dans les volumes de chambres, de sorte qu'une ventilation régulière est possible pour un faible apport d'énergie ;
- un fonctionnement du silo avec effet de cheminée a lieu en majeure partie ou exclusivement pendant le temps de maturation, et
- une aération naturelle est réalisée via une ouverture des tiroirs d'arrêt (18) dans les tubes d'écoulement pour l'eau d'infiltration (2) et/ou dans les couvercles des rigoles d'écoulement.

14. Procédé selon la revendication 13, **caractérisé en ce que** la conduite collectrice d'alimentation à ventilation forcée (17) est raccordée à un compresseur ou à un accumulateur d'air comprimé, les vannes d'arrêt (13) et les régulateurs de débit (14) étant actionnés automatiquement ou manuellement dans le but de l'aération par impulsions ou par bouffées, selon la température de silo mesurée et/ou la formation de gaz dans le silo.

15. Procédé selon la revendication 13, **caractérisé par** une commande cadencée, supplémentaire ou alternative, de l'aération forcée.

16. Procédé selon l'une des revendications 13 à 15, **caractérisé en ce que** l'eau d'infiltration qui s'est déposée dans les chambres d'aération (16) est vaporisée par apport d'air comprimé, irriguant ainsi le silo depuis l'intérieur.

17. Procédé selon l'une des revendications 13 à 16, **caractérisé en ce que** l'eau recueillie dans le canal de drainage ou dans le dispositif de drainage est utilisée pour arroser le silo, si nécessaire avec ajout d'eau fraîche ou d'eau usée.
